# EUROPÄISCHE PATENTSCHRIFT

(11) **EP 3 658 320 B1**
(45) Veröffentlichungstag und Bekanntmachung des Hinweises auf die Patenterteilung: **01.11.2023**
(21) Anmeldenummer: 18746928.3
(22) Anmeldetag: 27.07.2018
(51) Int. Cl.: B23B 29/034

(54) **ZERSPANUNGSWERKZEUG MIT EINER STELLEINRICHTUNG**
CUTTING TOOL COMPRISING AN ADJUSTING DEVICE
OUTIL D'USINAGE PAR ENLÈVEMENT DE COPEAUX DOTÉ D'UN DISPOSITIF DE RÉGLAGE

(30) Priorität: 28.07.2017 DE 102017213063
(43) Veröffentlichungstag der Anmeldung: 03.06.2020
(73) Patentinhaber: Gühring KG, 72458 Albstadt (DE)
(72) Erfinder: HECKEL, Gerd, 90617 Puschendorf (DE); HOLLFELDER, Hans-Peter, 90768 Fürth (DE); THANNER, Jürgen, 91161 Hilpoltstein (DE)
(74) Vertreter: Winter, Brandl - Partnerschaft mbB
(86) Internationale Anmeldenummer: PCT/EP2018/070400
(87) Internationale Veröffentlichungsnummer: WO 2019/020785

(56) Entgegenhaltungen:
- EP-A2- 1 767 295
- DE-A1- 2 723 622
- DE-B1- 2 460 028
- US-A- 2 874 597
- US-A- 3 324 529
- US-A1- 2016 114 402
- US-A1- 2016 368 063
- US-A1- 2017 014 916

## Beschreibung

Die Erfindung betrifft ein Zerspanungswerkzeug gemäß Oberbegriff des Anspruchs 1.

Ein derartiges Zerspanungswerkzeug ist beispielsweise aus der DE 100 52 376 A1 bekannt. Das in der Druckschrift gezeigte Zerspanungswerkzeug hat einen um eine Drehachse antreibbaren Grundkörper (Grundhalter) und eine den Grundkörper verlängernde werkzeugmaschinenseitige Schnittstelle mit einem HSK (Hohlschaftkegel)-Schaft. In einer Ausgestaltung des Zerspanungswerkzeugs ist ein mit einer Schneidplatte (Werkzeug) bestückter Schneidenträger (Werkzeughalter) in einer außenumfangsseitig offenen Aufnahmetasche am Grundkörper gelagert, während in einer anderen Ausgestaltung zwei jeweils mit einer Schneidplatte bestückte Schneidenträger axial versetzt jeweils in einer außenumfangsseitig offenen Aufnahmetasche am Grundkörper gelagert sind. Zum Ausgleich eines Schneidenverschlei-ßes ist jeder Schneidenträger radial einstellbar. Eine zu diesem Zweck vorgesehene Einstelleinrichtung ist aus einer im Grundkörper längsverschiebbar angeordneten Stellstange (Einstelldorn) und einem Stellelement (Druckelement) gebildet, das sich mit einem ersten Ende an einer Steuerfläche an der Stellstange und mit seinem zweiten Ende am Schneidenträger abstützt. Bei einer mittels einer stirnseitig betätigbaren Einstellschraube veranlassten axialen Verschiebung der Stellstange wird der oder werden die Schneidenträger über ein durch die zugeordnete Steuerfläche der Stellstange und das jeweilige Stellelement gebildetes Keilflächengetriebe radial nach au-ßen verdrängt.

Weitere, auf einem ähnlichen Funktionsprinzip beruhende Zerspanungswerkzeuge mit einem oder mehreren Schneidenträgern sind beispielsweise aus der DE 40 22 579 A1, WO 2004/012887 A2, EP 1 402 979 B1, WO 98/48964 A1, WO 2009/005804 A1, DE 24 05 694 A1 oder WO 2010/021284 A1 bekannt.

Bei den oben angegebenen Zerspanungswerkzeugen sind die Schneidenträger zur Feineinstellung der Schneiden oder zur Kompensation eines Schneidenverschleißes entweder durch eine elastische Verformung (vgl. z.B. DE 100 52 376 A1, EP 1 402 979 B1, WO 2009/005804 A1 und DE 24 05 694 A) oder durch eine Verschwenkung (vgl. DE 40 22 579 A1, WO 2004/012887 A2, WO 98/48964 A1 und WO 2010/021284 A1) relativ zum Grundkörper einstellbar. Zu diesem Zweck werden die Schneidenträger über eine im Grundkörper des Zerspanungswerkzeugs axial verschiebbar angeordnete Stellstange und ein im Grundkörper radial verschiebbar, zwischen einer Keilfläche an der Stellstange und dem Schneidenträger angeordnetes Stellelement radial gesteuert.

In der DE 10 2004 052 211 A1 und der DE 10 2005 028 366 A1 ist ein mehrschneidiges Zerspanungswerkzeug (Bohrstange) beschrieben, das über eine Stellstange (Zugstange) eine individuelle Nachstellung jeder der mehreren Schneiden ermöglicht. Zu diesem Zweck wird konkret vorgeschlagen, eine Einstellvorrichtung eines jeden einer Vielzahl von Schneidenträgern (Klemmhaltern) über eine Kopplungseinrichtung individuell mit der Stellstange zu verbinden. Dank der zwischen den Einstellvorrichtungen der Schneidenträger und der zentralen Stellstange angeordneten Kopplungseinrichtungen wird eine individuelle Schneidennachstellung ermöglicht, um einen Schneidenverschleiß auszugleichen.

Ferner ist aus der DE 196 49 143 A1 eine Justiereinrichtung bekannt, welche zum Ausgleich eines Schneidenverschleißes eine individuelle Verstellung eines Schneidenträgers gegenüber einem Grundkörper eines Zerspanungswerkzeugs ermöglicht. Die Justiereinrichtung der DE 196 49 143 A1 ist im Grundkörper (Schaft) des Zerspanungswerkzeugs (Bohrstange) angeordnet und aus einer Differentialschraube und einer Gewindehülse gebildet. Durch Drehen der Differentialschraube wird die Gewindehülse verschoben, wodurch wiederum der Schneidenträger durch Absenken oder Anheben seines in axialer Richtung schwenkbar gelagerten vorderen Abschnitts höhenmäßig verstellt wird.

Aus der US 4,428,704 ist weiterhin ein Zerspanungswerkzeug mit einem in einer außenumfangsseitig offenen Aufnahmetasche (recess) angeordneten Schneidenträger (cartridge) bekannt, der durch einen Schlitz in eine Brücke (bight portion) und zwei Schenkel (legs) unterteilt ist, von denen ein Schenkel mit einem Grundkörper (boring bar) fest verschraubt ist und der andere Schenkel eine Schneidplatte trägt und durch eine elastische Verformung relativ zu dem einen Schenkel radial einstellbar ist. Die zu diesem Zweck innerhalb des Schneidenträgers angeordnete Justiereinrichtung, die eine Differentialschraube aufweist, wirkt zwischen den gegeneinander verformbaren Schenkeln des Schneidenträgerkörpers. Die feste Verschraubung des Schneidenträgers verhindert jedoch eine radiale Verstellung des gesamten Schneidenträgers gegenüber dem Grundkörper.

Bei den aus dem Stand der Technik bekannten Lösungen erfolgt die Verstellung der Schneiden der jeweiligen Schneidenträger somit über eine elastische Verformung bzw. ein Verschwenken des sich in Längsrichtung des Zerspanungswerkzeugs erstreckenden Schneidenträgers. Die für die elastische Verformung bzw. das Verschwenken erforderliche Ausdehnung des Schneidenträgers in axialer Richtung begrenzt allerdings die Anzahl der Schneidenträger, die in axialer Richtung am Zerspanungswerkzeug vorgesehen sein können. Ferner ist die Verstellung der Schneiden mittels elastischer Verformung bzw. Verschwenkens bzw. des Angriffspunkts der Schneiden naturbedingt unpräzise.

Die Druckschriften DE 24 60 028 B1, US 2017/014916 A1, US 3 324 529 A und US 2 874 597 A offenbaren jeweils ein Zerspanungswerkzeug gemäß dem Oberbegriff des Anspruchs 1.

Ausgehend von dem oben diskutierten Stand der Technik liegt somit der Erfindung die Aufgabe zugrunde, ein Zerspanungswerkzeug mit einem um eine Drehachse drehantreibbaren Grundkörper, wenigstens einem am Grundkörper radial einstellbaren Schneidenträger und einer Stelleinrichtung zur Einstellung der Lage des Schneidenträgers gegenüber dem Grundkörper bereitzustellen, welche eine präzise Einstellung der Schneide bzw. des Schneidelements des Schneidenträgers ermöglicht, wobei der Schneidenträger kompakt aufgebaut ist und zusammen mit der Stelleinrichtung in axialer Richtung des Zerspanungswerkzeugs wenig Bauraum benötigt.

Diese Aufgabe wird durch ein Zerspanungswerkzeug mit den Merkmalen des Anspruchs 1 gelöst. Vorteilhafte oder bevorzugte Weiterbildungen sind jeweils Gegenstand abhängiger Ansprüche.

Ein erfindungsgemäßes Zerspanungswerkzeug wird bevorzugt zur Bohrungsnachbearbeitung oder Bohrungsfeinbearbeitung, im Besonderen einer sogenannten Lagergasse eingesetzt. Derartige Werkzeuge werden beispielsweise in der Automobilindustrie eingesetzt, um Bohrungen mehrerer in Reihe angeordneter Lagerstege einer Lagergasse zum Lagern einer Welle, beispielsweise einer Kurbelwelle oder Nockenwelle, auf ein Durchmesserendmaß zu bearbeiten. Speziell in diesem Falle ist das Zerspanungswerkzeug vorzugsweise mehrschneidig ausgebildet, um mehrere Lagerstege einer Lagergasse synchron bearbeiten zu können, so dass am Grundkörper des Zerspanungswerkzeugs mehrere Schneidenträger in den Abständen der Lagerstege entsprechenden axialen Abständen, vorzugsweise in einer Reihe, angeordnet sind.

Das erfindungsgemäße Zerspanungswerkzeug weist einen um eine Drehachse drehantreibbaren Grundkörper, wenigstens einen am Grundkörper radial einstellbar angeordneten Schneidenträger und eine Stelleinrichtung zur Einstellung der Lage des Schneidenträgers gegenüber dem Grundkörper auf. Der Schneidenträger ist in einer Führungsaussparung im Grundkörper quer zur Drehachse des Grundkörpers, vorzugsweise radial, verschiebbar angeordnet. Die Stelleinrichtung weist ein im Grundkörper sowohl quer (senkrecht) zur Drehachse des Grundkörpers als auch quer (senkrecht) zur Verschieberichtung des Schneidenträgers verstellbares Stellelement auf, an welchem der Schneidenträger abgestützt ist.

Durch die insbesondere radiale Verschiebbarkeit des Schneidenträgers und somit der an diesem angeordneten Schneide (Schneidelements) lässt sich eine präzise Ein- und Verstellung des Schneidelements in Bezug auf den Grundkörper und ein spanend zu bearbeitendes Werkstück erreichen, insbesondere eine präzisere Einstellung als bei einer Verstellung des Schneidenträgers durch Verschwenkung oder elastische Verformung wie sie aus dem Stand der Technik bekannt ist. Selbstverständlich kann ein Schneidenträger mehrere Schneiden (Schneidelemente) umfassen.

Zusätzlich zu der Stelleinrichtung für den Schneidenträger des erfindungsgemäßen Zerspanungswerkzeugs ist erfindungsgemäß eine in den Schneidenträger integrierte Justiereinrichtung zur Justierung der Lage des Schneidenträgers gegenüber dem Stellelement der Stelleinrichtung vorgesehen, über welche beispielsweise bei der Herstellung des Zerspanungswerkzeugs die Lage des Schneidenträgers gegenüber dem Stellelement voreingestellt werden kann.

Insbesondere zur Bearbeitung mehrerer Lagerstege einer Lagegasse kann das erfindungsgemäße Zerspanungswerkzeug eine Vielzahl von Schneidenträgern aufweisen, die jeweils in einer entsprechenden Führungsaussparung im Grundkörper quer zur Drehachse, vorzugsweise radial, verschiebbar angeordnet und an einem dem jeweiligen Schneidenträger zugeordneten Stellelement abgestützt sind. D.h. jedem Schneidenträger ist eine Stelleinrichtung mit einem Stellelement zugeordnet, sodass die Schneidenträger individuell einstellbar sind, wobei das Stellelement senkrecht zur Drehachse des Grundkörpers und senkrecht zur Verschieberichtung des Schneidenträgers verstellbar. Dabei können die Schneidenträger in gleichen oder unterschiedlichen Abständen zur Drehachse des Grundkörpers lageeinstellbar angeordnet sein. Auch können die Abstände zwischen den Schneidenträgern in Längsrichtung des Zerspanungswerkzeugs gleichmäßig oder variabel sein.

Der bzw. der jeweilige Schneidenträger ist vorzugsweise formschlüssig in der ihm zugeordneten Führungsaussparung des Grundkörpers aufgenommen. Des Weiteren ist der jeweilige Schneidenträger bevorzugt verdrehsicher in der Führungsaussparung aufgenommen und kann als Bohreinsatz ausbildet sein, der in die Führungseinsparung eingesetzt ist. Dabei erstreckt sich die Führungsaussparung senkrecht zur Drehachse des Grundkörpers des erfindungsgemäßen Zerspanungswerkzeugs in Verschieberichtung des Schneidenträgers.

Gemäß bevorzugter Ausführungsform ist die Führungsaussparung als Durchgangsaussparung, insbesondere als Durchgangsbohrung, ausgebildet. In diesem Falle weist der Schneidenträger bevorzugt einen sich quer (senkrecht) zur Drehachse des Grundkörpers und quer (senkrecht) zur Verschieberichtung des Schneidenträgers erstreckenden Durchbruch zur Aufnahme des Stellelements der dem Schneidenträger zugeordneten Stelleinrichtung auf. In der die Führungsaussparung umgebenden Wand des Grundkörpers sind Aufnahmeöffnungen (auch Ausnehmungen oder Aufnahmen genannt) zur Aufnahme der Stelleinrichtung bzw. von deren Enden/Endbereichen vorgesehen.

Gemäß alternativer Ausführungsform ist die Führungsaussparung als Grundaussparung, d.h. als Aussparung mit einem Grund bzw. Boden, insbesondere als Sacklockbohrung, ausgebildet sein, wobei der Grund der Grundaussparung am der Schneide des Schneidenträgers entgegengesetzten Ende der Grundaussparung vorgesehen ist. In diesem Falle ist das Stellelement der Stelleinrichtung vorzugsweise zwischen dem Grund/Boden der Grundaussparung und dem Schneidenträger angeordnet. Auch bei dieser Ausführungsform weist die die Grundaussparung umgebende Wand des Grundkörpers entsprechende Aufnahmeöffnungen zur Aufnahme der Stelleinrichtung auf.

An dem Schneidenträger kann wenigstens ein Schneidelement vorgesehen sein, welches radial nach außen absteht. Bei dem Schneidelement handelt es sich insbesondere um eine Schneidplatte mit einer Schneide, vorzugsweise um eine Wendeschneidplatte. Das Schneidelement kann in dem am Schneidenträger vorgesehenen Sitz lageeinstellbar, z.B. durch Verschraubung, Klemmung, etc., oder lagefest, z.B. durch Kleben oder Löten, aufgenommen sein.

Der Schneidenträger ist vorzugsweise gegenüber dem Grundkörper elastisch, vorzugsweise federnd, abgestützt, sodass er senkrecht zur Drehachse des Grundkörpers verschiebbar ist. Hierzu ist der Schneidenträger gemäß bevorzugter Ausführungsform mit einer Traverse verbunden, die über eine oder mehrere Druckfedern gegen den Grundkörper abgestützt ist, wobei sich die Druckfedern in der Verschieberichtung des Schneidenträgers erstrecken. Die Traverse erstreckt sich wiederum senkrecht zur Verschieberichtung des Schneidenträgers, vorzugsweise parallel zur Drehachse des Grundkörpers.

Die Stelleinrichtung des erfindungsgemäßen Zerspanungswerkzeugs weist vorzugsweise einen Gewindetrieb zum Antreiben des Stellelements der Stelleinrichtung auf. Gemäß bevorzugter Ausgestaltung ist das Stellelement aus einer Gewindehülse gebildet, welche eine Steuerschräge aufweist, an welcher der Schneidenträger abgestützt ist. Die Gewindehülse ist in ihrer axialen Richtung, d.h. quer (senkrecht) zur Drehachse des Grundkörpers und quer (senkrecht) zur Verschieberichtung des Schneidenträgers, verschiebbar. Der Gewindetrieb weist eine Antriebsspindel auf, welche am Grundkörper gelagert und mit der Gewindehülse verschraubt ist. Der Gewindetrieb weist bevorzugt ferner eine im Grundkörper beabstandet zur Gewindehülse festgelegte Gewindebuchse (auch Lagerbuchse genannt) auf. Die Gewindebuchse ist feststehend im Grundkörper angeordnet. Die Gewindebuchse ist insbesondere aus herstellungstechnischen Gründen anstelle einer Gewindebohrung im den Schneidenträger umgebenden Grundkörper vorgesehen.

Die Antriebsspindel ist vorzugsweise als Differentialgewindespindel ausgebildet, welche mit einem ersten Gewindeabschnitt mit der Gewindehülse und mit einem zweiten Gewindeabschnitt mit der Gewindebuchse verschraubt ist. Gewindehülse und Gewindebuchse sind auf die Differentialgewindespindel aufgeschraubt. Der erste Gewindeabschnitt und der zweite Gewindeabschnitt können verschiedene Gewindesteigungen (Ganghöhen), aber gleiche Gewinderichtungen (Gangrichtungen) aufweisen. Bei einer Betätigung der Differentialgewindespindel bewegt sich die Gewindehülse in Richtung der Spindelachse, d.h. senkrecht zur Drehachse des Grundkörpers und senkrecht zur Verschieberichtung des Schneidenträgers um eine Strecke, die dem Steigungsunterschied der beiden Gewindeabschnitte der Differentialgewindespindel entspricht. Zwischen der Gewindehülse und der Gewindebuchse kann eine Druckfeder vorgesehen sein, um einerseits ein Gewindespiel zwischen dem Außengewinde des ersten Gewindeabschnitts der Differentialgewindespindel und dem Innengewinde der Gewindehülse und andererseits ein Gewindespiel zwischen dem Außengewinde des zweiten Gewindeabschnitts der Differentialgewindespindel und dem Innengewinde der Gewindebuchse zu reduzieren.

Antriebsspindel, Gewindehülse und Gewindebuchse erstrecken sich senkrecht zur Drehachse der Grundkörpers und senkrecht zur Verschieberichtung des Schneidenträgers. Bei der Ausführungsform, bei welcher die Führungsaussparung für den Schneidenträger als Duchgangsaussparung ausgebildet ist, erstrecken sich die Antriebsspindel und die Gewindehülse durch den im Schneidenträger vorgesehenen Durchbruch, welcher insbesondere einen im Wesentlichen quadratischen oder rechteckigen Querschnitt aufweisen kann.

Der bzw. jeder Stelleinrichtung des erfindungsgemäßen Zerspanungswerkzeugs ist vorzugsweise ein am Grundkörper drehbeweglich gehaltenes Betätigungselement zugeordnet, das mit der Antriebsspindel bzw. der Differentialgewindespindel drehfest und insbesondere axialbeweglich in Eingriff steht und der Drehbetätigung der Antriebsspindel bzw. der Differentialgewindespindel dient. Das Betätigungselement umfasst vorzugsweise einen sogenannten Skalenring, welcher beispielsweise eine Skalierung von 10 Marken/Teilstrichen aufweist, sodass eine Einstellgenauigkeit von 0,001 mm im Halbdurchmesser präzise realisiert werden kann. Das Betätigungselement bzw. dessen Skalenring ist vorzugweise mittels eines Federrings am Grundkörper des erfindungsgemäßen Zerspanungswerkzeugs befestigt und stellt zugleich die Längskupplung der Antriebsspindel bzw. der Differentialgewindespindel dar.

Mittels der Stelleinrichtung des erfindungsgemäßen Zerspanungswerkzeugs ist der Schneidenträger zwischen einer eingesteuerten Position, in der das am Schneidenträger gehaltene Schneidelement auf einem minimalen Durchmesser bezüglich einer Dreh- oder Längsmittelachse des Grundkörpers liegt, in radialer Richtung beispielsweise in einem definierten (geringen) Abstand außerhalb (beispielsweise einem Abstand von 0,2 mm), auf Höhe oder innerhalb des Außenumfangs des Grundkörpers, und einer ausgesteuerten Position, in der das am Schneidenträger gehaltene Schneidelement auf einem maximalen Radius, d.h. auf einem vorgegeben Nenndurchmessermaß bezüglich der Dreh- oder Längsmittelachse des Grundkörpers liegt, d.h. in einem (großen) radialen Abstand (beispielsweise einem Abstand von 0,5 mm) über dem Außenumfang des Grundkörpers, radial verstellbar. Ein Verstellbereich des am Schneidenträger gehaltenen Schneidelements zwischen 0,2 mm und 0,5 mm im Bearbeitungsdurchmesser kann beispielsweise mit Hilfe des Betätigungselements erreicht werden, das einen Skalenring mit 10 Teilstrichen an dessen Umfang aufweist, wobei der Zustellschritt zwischen 0,002 mm und 0,005 mm im Bearbeitungsdurchmesser beträgt und maximal 10 Umdrehungen des Skalenrings erforderlich sind. Dadurch ist eine stufenlose Kleiner- und Größerverstellung in dem genannten Verstellbereich möglich.

Die Justiereinrichtung weist bevorzugt ein vorzugsweise als Stellschraube, insbesondere als Abdrückschraube, ausgebildetes Stellglied auf, über welches der Schneidenträger an dem Stellelement, insbesondere an der Steuerschräge der das Stellelement bildenden Gewindehülse, abstützt ist. Die Stellschraube ist in einer vorzugsweise geschlitzten Gewindebuchse angeordnet, deren Gewindespiel mittels eines Gewindestifts ein- bzw. verstellbar ist. Um durch Verunreinigungen oder Ungenauigkeiten bedingte Justierfehler so gering wie möglich zu halten, wird vorteilhaft eine Punktanlage der Stellschraube am Stellelement, insbesondere dessen Steuerschräge, angestrebt. Eine Punktanlage wird besonders einfach durch eine runde Fläche erreicht. Hierzu kann das der Steuerfläche gegenüberliegende Ende des vorzugsweise als Stellschraube ausgebildeten Stellglieds abgerundet sein.

Dadurch, dass sich die Stelleinrichtung des erfindungsgemäßen Zerspanungswerkzeugs sowohl in Querrichtung zur Drehachse des Grundkörpers als auch in Querrichtung zur Verschieberichtung des Schneidenträgers erstreckt, ist eine bauraumsparende Anordnung der Schneidenträger in axialer Richtung, d.h. in Längsrichtung, des Zerspanungswerkzeugs möglich, sodass eine hohe Anzahl von Schneidenträgern und somit eine hohe Anzahl von Schneiden/Schneidelementen auf engem Raum (in axialer Richtung bzw. Längsrichtung gesehen) am Zerspanungswerkzeug vorgesehen sein können. Da typischerweise unterschiedliche Schneiden/Schneidelemente für unterschiedliche Bearbeitungsschritte (z.B. Schruppen, Semifinish, Finish, Versehen mit einer Fase etc.) eingesetzt werden, können bei dem erfindungsgemäßen Zerspanungswerkzeug Schneiden für eine hohe Anzahl von Bearbeitungsschritten auf einem Abschnitt relativer kurzer axialer Ausdehnung untergebracht werden, sodass das erfindungsgemäße Zerspanungswerkzeug zum Beispiel bei der Bearbeitung von Lagerstellen einer Lagergasse beim Wechsel von einem Bearbeitungsschritt zum nächsten und somit beim Wechsel von einer Schneide zu einer anderen in Längsrichtung nur über kurze Strecken hin- und her bewegt werden muss und vorteilhafterweise nur ein einziges erfindungsgemäßes Zerspanungswerkzeug für die Bearbeitung einer Lagergasse erforderlich ist. D.h. es muss nicht zwischen unterschiedlichen Zerspanungswerkzeugen mit für unterschiedliche Bearbeitungsschritte ausgebildeten Schneidenträgern/Schneidelementen gewechselt werden.

Im Folgenden werden mit Hilfe der beigefügten Zeichnungen bevorzugte Ausführungsformen eines erfindungsgemäßen Zerspanungswerkzeugs beschrieben. Es zeigen:
Fig. 1 eine perspektivische Ansicht des erfindungsgemäßen Zerspanungswerkzeugs;
Fig. 2 einen Querschnitt eines Zerspanungswerkzeugs gemäß einer ersten Ausführungsform der Erfindung;
Fig. 3 einen Längsschnitt der in Fig. 2 gezeigten ersten Ausführungsform der Erfindung;
Fig. 4 einen Querschnitt eines Zerspanungswerkzeugs gemäß einer zweiten Ausführungsform der Erfindung; und
Fig. 5 eine Seitenansicht eines Abschnitts der in Fig. 4 gezeigten zweiten Ausführungsform der Erfindung, welcher einen Schneidenträger mit Justiereinrichtung umfasst.

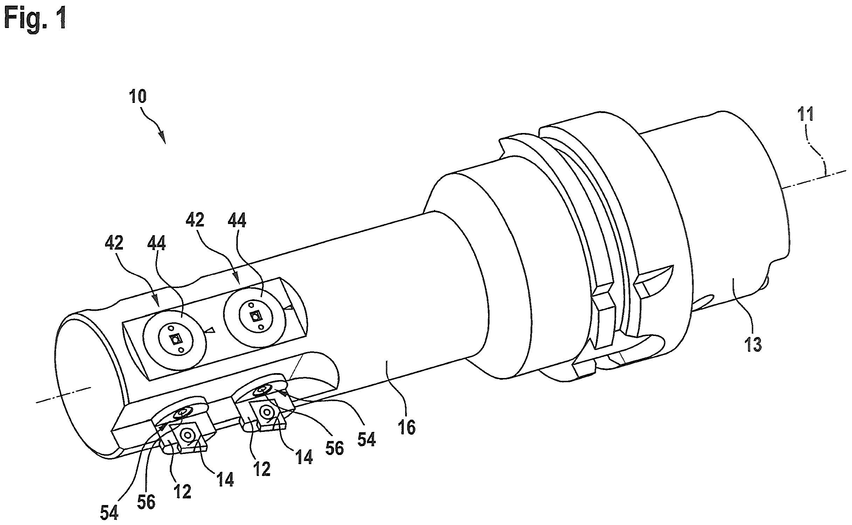

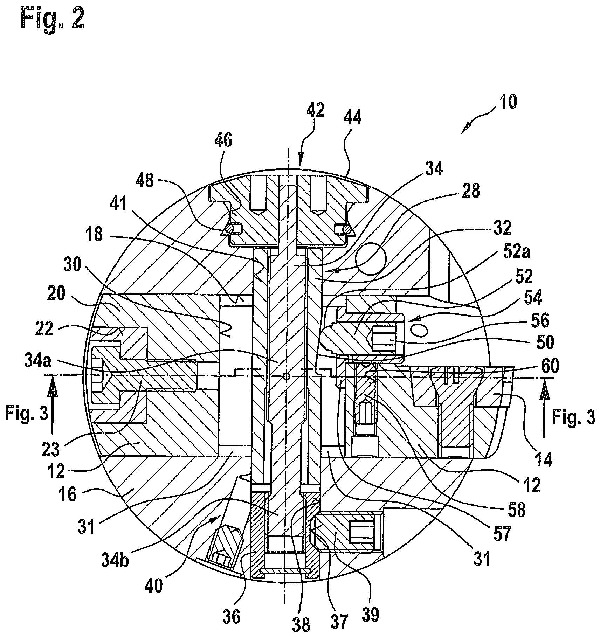

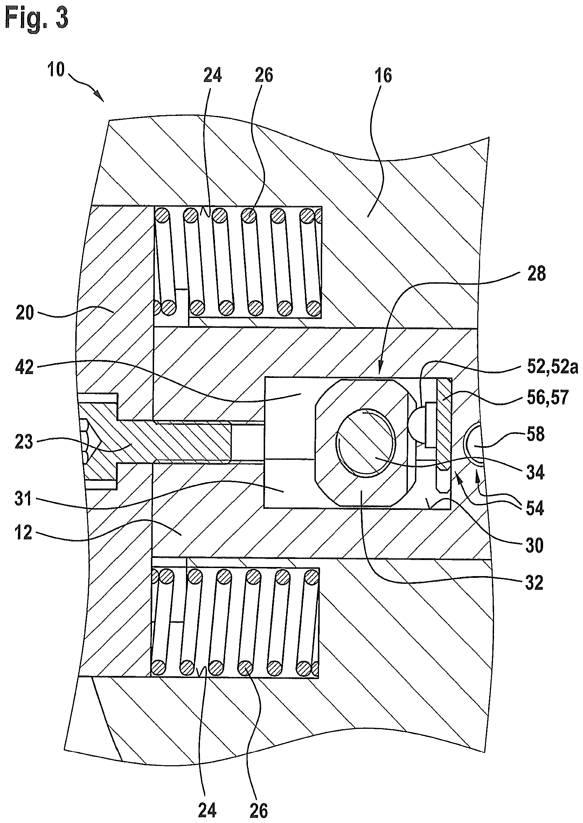

Die Fign. 1 bis 3 zeigen ein Zerspanungswerkzeug 10 gemäß einer ersten Ausführungsform der Erfindung in Quer- und Längsschnitt und in Seitenansicht. Das Zerspanungswerkzeug 10 weist wenigstens einen Schneidenträger 12 mit einem Schneidelement 14 auf. Das Schneidelement 14 kann von einer Schneidplatte, insbesondere einer Wendeschneidplatte, gebildet sein. Alternativ kann der Schneidenträger 12 als Schneidelement statt der Schneidplatte beispielsweise einen Schneideinsatz, eine Schneidleiste, etc. tragen. Das Schneidelement 14 weist jedenfalls wenigstens eine geometrisch bestimmte Schneide zur spanabhebenden Bearbeitung einer zugeordneten Bearbeitungsstelle, insbesondere einer Lagestelle, auf. Das Zerspanungswerkzeug 10 ist vorzugsweise mit einer nicht dargestellten Kühlung bzw. Kühlmittelzufuhr versehen.

Zur Bearbeitung von mehreren Lagerstellen einer Lagergasse (nicht dargestellt) weist das Zerspanungswerkzeug 10 vorzugsweise mehrere Schneidenträger 12 mit Schneidelementen 14 auf, die in axialer Richtung bzw. in Längsrichtung des Zerspanungswerkzeugs 10, d.h. parallel zur nicht näher bezeichneten Dreh- bzw. Längsmittelachse des Zerspanungswerkzeugs 10, beabstandet bevorzugt in einer Reihe angeordnet sind. Die Schneidelemente 14 können dabei zur Schrupp-, SEMIFinish-, FINISH-Bearbeitung und, falls gewünscht, zum Versehen eines Werkstücks mit Fasen vorgesehen und ausgestaltet sein. Die axialen Abstände, in denen die Schneidelemente 14 angeordnet sind, entsprechen den Abständen, in denen die zu bearbeiteten Werkstücke bzw. Werkstückbereiche, beispielsweise die Lagerstege einer Lagergasse, angeordnet sind. Eine derartige Lagergasse befindet sich beispielsweise in einem zu bearbeitenden Zylinderkurbelgehäuse eines Verbrennungsmotors. Das erfindungsgemäße Zerspanungswerkzeug 10 kann daher als ein Lagergassenwerkzeug oder allgemein als Bohrungsnachbearbeitungs- oder Bohrungsfeinbearbeitungswerkzeug eingesetzt werden.

Das erfindungsgemäße Zerspanungswerkzeug 10 weist einen um eine nicht näher bezeichnete Dreh- oder Längsmittelachse (in Fig. 1: Bezugsziffer 11) des Zerspanungswerkzeugs 10 drehantreibbaren Grundkörper 16 (auch Werkzeugschaft genannt) auf, der in der gezeigten Ausführungsform beispielhaft als eine Bohrstange ausgebildet ist. Der Grundkörper 16 hat an seinem hinteren Ende eine werkzeugmaschinenspindelseitige Schnittstelle 13, die in der gezeigten Ausführungsform einen sogenannten HSK(Hohlschaftkegel)-Schaft hat. Alternativ dazu kann beispielsweise ein sogenannter SK(Steilkegel)-Schaft oder dergleichen vorgesehen sein.

Der Schneidenträger 12 ist in einer in dem Grundkörper 16 vorgesehenen Führungsaussparung 18 aufgenommen, wobei sich die Führungsaussparung 18 senkrecht zur Drehachse des Grundkörpers 16 bzw. des Zerspanungswerkzeugs 10 erstreckt. Der Schneidenträger 12 ist in der Führungsaussparung 18 quer zur Drehachse des Grundkörpers 16, insbesondere radial, verschiebbar angeordnet. Der Schneidenträger 12 und entsprechend die Führungsaussparung 18 weisen insbesondere einen kreisförmigen Querschnitt auf, können aber beispielsweise auch einen rechteckigen, insbesondere quadratischen, Querschnitt aufweisen.

An seinem einen Ende weist der Schneidenträger 12 einen nicht näher bezeichneten Schneidelementsitz zur Aufnahme des Schneidelements 14 auf. An seinem anderen, gegenüberliegenden Ende ist der Schneidenträger 12 mit einer sich senkrecht zur Erstreckungsrichtung des Schneidenträgers 12, vorzugsweise parallel zur Drehachse des Grundkörpers 16, und seitlich über den Schneiderträger 12 in den Grundkörper 16 erstreckenden Traverse 20 verbunden, die federnd am Grundkörper 16 gelagert ist. Insbesondere bei kreisförmigem Querschnitt des Schneidenträgers 12 bildet die Traverse 20 ferner einer Verdrehsicherung des Schneidenträgers 12 in der Führungsaussparung 18. D.h. der Schneidenträger 12 ist über die Traverse 20 federnd am Grundkörper 16 abgestützt. Zur Aufnahme der Traverse 20 im Schneidenträger 12 kann an dem dem Schneidelement 14 gegenüberliegenden Ende des Schneidenträger 12 eine Nut 22 im Schneidenträger 12 vorgesehen sein. Die Traverse 20 ist an dem Schneidenträger 12 beispielsweise mittels einer in die Nut 22 eingeführten Schraube 23 befestigt, wobei die Schraube 23 von außerhalb des Grundkörpers 16 betätigbar ist. Auf ihrer dem Schneidenträger 12 abgewandten Seite ist die Traverse 20 vorzugsweise abgerundet, wobei der Rundungsradius dem Radius des Grundkörpers 16 entspricht. In der die Führungsaussparung 18 umgebenden Wand des Grundkörpers 16 sind Ausnehmungen 24 zur Aufnahme der seitlich über den Schneidenträger 12 überstehenden Enden der Traverse 20 vorgesehen.

Zur federnden Lagerung der Traverse 20 und somit des Schneidenträgers 12 am Grundkörper 16 sind im Grundkörper 16 Druckfedern 26 in den Ausnehmungen 24 integriert, welche in Verschieberichtung des Schneidenträger 12 auf die sich quer zum Schneidenträger 12 erstreckende Traverse 20, insbesondere auf die seitlich über den Schneidenträger 12 überstehenden Enden der Traverse 20, die ebenfalls in den Ausnehmungen 24 aufgenommen sind, drücken. Vorzugsweise ist jedem Ende der Traverse 20 eine Druckfeder 26 zugeordnet. Die Ausnehmungen 24 erstrecken sich somit einerseits in Erstreckungsrichtung der Traverse 20 und andererseits in Verschieberichtung des Schneidenträgers 12 im Grundkörper 16. Im Grundkörper 16 sind ferner eine oder mehrere Nuten vorgesehen, die die Traverse 20 und somit den Schneidenträger 12 gegen eine Verdrehung sichern; diese Nuten sind vorzugsweise durch die Ausnehmungen 24 bzw. deren die seitlich überstehenden Enden der Traverse 20 aufnehmenden Bereiche gebildet sein.

Gemäß alternativer Ausgestaltung kann die Traverse 20 sich senkrecht zur Drehrichtung des Grundkörpers 16, d.h. parallel zur Längsrichtung des Durchbruchs 30, erstrecken, wobei vorzugsweise im Grundkörper 16 festgelegte Abstützelemente (z.B. Stifte) in im Außenumfang des Schneidenträgers 12 vorgesehene Ausnehmungen hineinragen, in bzw. über welche ebenfalls die Enden/Endbereiche der Traverse 20 (hinein-)ragen. In diesen Ausnehmungen sind bei dieser Ausgestaltung Druckfedern vorgesehen, die sich an den Abstützelementen abstützen und gegen die Traverse 20 bzw. deren Enden/Endbereiche drücken.

Dem Schneidenträger 12 ist eine Stelleinrichtung 28 zugeordnet, um den Schneidenträger 12 und somit das Schneidelement 14 in dessen Verschieberichtung quer zur Drehachse des Grundkörpers 16 in der Führungsaussparung 18 zu verschieben. Der Schneidenträger 12 weist einen Durchbruch 30 auf, durch welchen die Stelleinrichtung 28 lose, d.h. mit Spiel, durchgeführt wird, sodass die Stelleinrichtung 28 im Schneidenträger 12 quer zur Drehachse des Grundkörpers 16 und quer zur Verschieberichtung des Schneidenträgers 12 angeordnet ist. D.h. der Durchbruch 30 verläuft einerseits senkrecht zur Führungsaussparung 18 und andererseits senkrecht zur Drehachse des Grundkörpers 16. Der Durchbruch 30 weist bevorzugt einen rechteckigen, insbesondere einen quadratischen, Querschnitt auf. Zumindest in Verschieberichtung des Schneidenträgers 12 ist zwischen der Stelleinrichtung 28 (bzw. deren später beschriebenem Stellelement 32) und der Innenwand des Durchbruchs 30, vorzugsweise auf beiden Seiten, ein Spielraum 31 (auch Freiraum genannt) vorgesehen, sodass der Schneidenträger 12 in dessen Verschieberichtung in diesem Spielraum 31 in der Führungsaussparung 18 verschoben werden kann.

Die Stelleinrichtung 28 weist ein vorzugsweise als axial verschiebbare Gewindehülse ausgestaltetes Stellelement 32 und einen Gewindetrieb mit einer Antriebsspindel 34 auf. Unter der axialen Verschiebbarkeit der Gewindehülse 32 wird eine Verschiebbarkeit entlang der Längsachse des Durchbruchs 30, d.h. senkrecht zur Drehachse des Grundkörpers 16 und senkrecht zur Verschieberichtung des Schneidenträgers 12 verstanden. Bevorzugt umfasst der Gewindetrieb ferner eine feststehende Gewindebuchse 36 (auch Lagerbuchse genannt), die fest, d.h. verdrehsicher und unverschiebbar, im Grundkörper 16 in einer Ausnehmung 38 angeordnet ist, die sich wie der Durchbruch 30 quer zur Drehachse des Grundkörpers 16 und quer zur Verschieberichtung des Schneidenträgers 12 erstreckt und zum Inneren der Führungsaussparung 18 hin geöffnet ist. Zur festen Verankerung der Gewindebuchse 36 im Grundkörper 16 kann die Gewindebuchse 36 in ihrem Außenumfang eine nichtringförmige Einbuchtung 37 aufweisen, auf die ein von außerhalb des Grundkörpers 16 betätigbarer Stift 39 drückt, welcher insbesondere als Pressstift ausgestaltet ist. Die Gewindebuchse 36 kann auch durch eine Presspassung, Löten, Kleben oder dergleichen dreh- und axialfest im Grundkörper 16 verankert sein.

Die Ausnehmung 38 nimmt ferner das in der Gewindebuchse 36 befindliche Ende der Antriebsspindel 34 und vorzugsweise ein ggfs. über den Durchbruch 30 in Richtung auf die Gewindebuchse 36 hinausragendes Ende der Gewindehülse 32 auf. Auf der gegenüberliegenden Seite des Durchbruchs 30 kann ebenfalls eine Ausnehmung 41, die auf die Ausnehmung 38 ausgerichtet ist und zum Inneren der Führungsaussparung 18 hin offen ist, zur Aufnahme eines aus dem Durchbruch 30 herausragenden Endes der Antriebsspindel 34 und ggfs. eines aus dem Durchbruch 30 herausragenden Endes der drehbar und axial verschiebbar gelagerten Gewindehülse 32 vorgesehen sein.

Die Antriebsspindel ist vorzugsweise als Differentialgewindespindel 34 (auch Differentialgewindeschraube genannt) ausgestaltet und weist einen ersten Gewindeabschnitt 34a und einen zweiten Gewindeabschnitt 34b auf. Der erste Gewindeabschnitt 34a ist mit einer nicht näher bezeichneten Gewindebohrung der Gewindehülse 32 verschraubt, während der zweite Gewindeabschnitt 34b mit einer nicht näher bezeichneten Gewindebohrung der Gewindebuchse 36 verschraubt ist. Der erste Gewindeabschnitt 34a und der zweite Gewindeabschnitt 34b haben ungleiche Gewindesteigungen (Ganghöhen), aber gleiche Gewinderichtungen (Gangrichtungen). Bei einer Drehbetätigung der Differentialgewindespindel 34 bewegt sich die Gewindehülse 32 daher entlang der nicht näher bezeichneten Spindelachse der Differentialgewindespindel 34 um eine Strecke, die dem Steigungsunterschied der beiden Gewindeabschnitte 34a, 34b der Differentialgewindespindel 34 entspricht. Die Spindelachse erstreckt sich senkrecht der Verschieberichtung des Schneidenträgers 12 und senkrecht der Drehachse des Grundkörpers 16. Aufgrund des Steigungsunterschieds kann die Gewindehülse 34 durch Verdrehung der Differentialgewindespindel 34 sehr präzise verschoben werden. So können die Gewindesteigungen der Gewindeabschnitte 34a, 34b beispielsweise so festgelegt sein, dass die Gewindehülse 34 pro Umdrehung der Differentialgewindespindel 34 um 0,1 mm verschoben wird. Für eine solche Verschiebung kann die Gewindebuchse 36 insbesondere eine Steigungsschräge von 5,75° aufweisen. Der Stelleinrichtung 28 bzw. deren Differentialgewindespindel 34 ist vorzugsweise eine Schmiermittelzufuhr 40 zugeordnet.

Zur Drehbetätigung ist die Antriebsspindel bzw. die Differentialgewindespindel 34 an ihrem gewindebuchsenfernen Ende mit einem Betätigungselement 42 drehfest, in axialer Richtung aber verschiebbar verbunden. Das Betätigungselement 42 umfasst in dem gezeigten Ausführungsbeispiel im Besonderen einen Skalenring 44 und ist in einer entsprechenden Aufnahme 46 im Grundkörper 16, vorzugsweise über einen Federring 48, drehbar gelagert. D.h. das Betätigungselement 42 mit dem Skalenring 44 ist in der Aufnahme 46 drehbeweglich gelagert. Der Skalenring 44 ist vorzugsweise in einer nicht dargestellten Ausnehmung im Betätigungselement 42 angeordnet. Die Aufnahme 46 ist vorzugsweise auf die Ausnehmung 38 für die Gewindebuchse 36 und auf die dieser gegenüberliegende Ausnehmung 41 für die Differentialgewindespindel 34 (und ggfs. die Gewindehülse 32) ausgerichtet und geht bevorzugt in die Ausnehmung 41 über. Das Betätigungselement 42 fungiert somit als Längskupplung für die Antriebs- bzw. Differentialgewindespindel 34. Der Skalenring 44 kann beispielsweise 10 Marken/Markierungen aufweisen, sodass eine Zustell-/Einstellgenauigkeit von insbesondere 0,001 mm im Halbmesser erzielt werden kann. Durch die Aufnahme 46 kann ein Benutzer das Betätigungselement 42 bzw. dessen Skalenring 44 von außerhalb des Zerspanungswerkzeugs 10 bedienen.

Das insbesondere als Gewindehülse 32 ausgebildete Stellelement weist eine Steuerschräge 50 auf, an welcher sich der Schneidenträger 12 abstützt. Die Steuerschräge 50 bildet mit der Drehachse der Differentialgewindespindel 34 einen schiefen Winkel, insbesondere einen spitzen Winkel. Wird nun die Differentialgewindespindel 34 mittels des Betätigungselements 40 gedreht, so verschiebt sich das Stellelement bzw. die Gewindehülse 32 entlang der Drehachse/Spindelachse der Differentialgewindespindel 34. Dabei verschiebt sich die Steuerschräge 50 des Stellelements 32 ebenfalls entlang der Drehachse/Spindelachse der Differentialgewindespindel 34. Der sich an der Steuerschräge 50 abstützende Schneidenträger 12 wird durch die formschlüssige Anordnung des Schneidenträgers 12 in der Führungsaussparung 18 an einer Bewegung entlang der Drehachse der Differentialgewindespindel 34 gehindert und bei Verschiebung der Steuerschräge 50 entlang der Spindelachse aufgrund seiner federnden Lagerung senkrecht dazu und außerdem senkrecht zur Drehachse des Grundkörpers 16 in der Führungsaussparung 18 verschoben, sodass das Schneidelement 14 entweder in radialer Richtung vom Grundkörper 16 weg oder auf diesen zu (oder je nach Ausgestaltung sogar in diesen hinein) bewegt wird. Diese radiale Verschiebung erfolgt vorteilhafterweise ohne Drehung des Schneidelements 14 bzw. von dessen Schneide um die Drehachse des Grundkörpers 16 herum, sodass eine präzise Einstellung des Schneidelements 14/von dessen Schneide erzielt werden kann.

Vorzugsweise weist der Schneidenträger 12 der Steuerschräge 50 gegenüberliegend und dem Schneidelement 14 abgewandt ein Stellglied 52 auf, welches sich vorzugsweise in Verschieberichtung des Schneidenträger 12 erstreckt und sich mit seinem dem Schneidelement 14 abgewandten Ende, welches vorzugsweise als abgerundete Keilfläche 52a ausgebildet ist, an der Steuerschräge 50 abstützt. Die gezeigte Ausführungsform zeichnet sich durch einen Punktkontakt zwischen der stirnseitigen runden Keilfläche 52a des Stellgliedes und der Steuerschräge 50 auf, der einen geringen Verschmutzungsgrad und eine besonders genaue Einstellung des Schneidenträgers 12 in dessen Verschieberichtung gewährleistet. Wird die Differentialgewindespindel 34 mittels des Betätigungselements 40 gedreht und verschiebt sich somit die Steuerschräge 50 in senkrechter Richtung zur Verschieberichtung des Schneidenträger 12, so werden das Stellglied 52 und über das Stellglied 52 der gesamte Schneidenträger 12 senkrecht zur Drehachse des Grundkörpers 16 und senkrecht zur Drehachse der Differentialgewindespindel 34 verschoben. Bei dem erfindungsgemäßen Zerspanungswerkzeug 10 wird der Schneidenträger 12 nur über die Druckfedern 26, das Zusammenwirken von Stellelement/Gewindehülse 32 bzw. dessen Steuerschräge 50 mit dem Stellglied 52 und dem auftretenden Schnittdruck der Zerspanung in dessen Position gehalten. Die Druckfedern 26 sind bezüglich ihrer Federkraft vorzugsweise so ausgestaltet, dass die Traverse 22 in keiner Stellung des Schneidenträgers 12 über den äußeren Umfang des Grundkörpers 16 radial hinausragt.

Das Stellglied 52 ist vorzugsweise Teil einer zusätzlich zu der Stelleinrichtung 28 vorgesehenen Justiereinrichtung 54, welches insbesondere dazu dient, die Position des Schneidenträgers 12 gegenüber dem Stellelement 32 (insbesondere dessen Steuerschräge 50) bei der Herstellung des Zerspanungswerkzeugs 10 voreinzustellen.

Zu diesem Zweck ist jedem Schneidenträger 12 des erfindungsgemäßen Zerspanungswerkzeugs 10 zusätzlich zu der Stelleinrichtung 28, die insbesondere zur Feinsteinstellung beispielsweise im Bereich von 0,2 mm bis 0,5 mm dient, eine Justiereinrichtung 54 zugeordnet, über die der Schneidenträger 12 gegenüber dem Stellelement 32 individuell in radialer Richtung des Grundkörpers 16 justierbar ist.

Wie oben erwähnt, umfasst die Justiereinrichtung 54 das Stellglied 52, welches vorzugsweise senkrecht zur Drehachse des Grundkörpers 16 und senkrecht zur Drehachse/Spindelachse der Antriebspindel/Differentialgewindespindel 34 verstellbar ist. Das Stellglied 52 ist hierfür vorzugsweise als Stellschraube, insbesondere als Abdrückschraube, ausgebildet, die sich an der Steuerschräge 50 des Stellelements bzw. der Gewindehülse 32 abstützt und in Verschieberichtung des Schneidenträgers 12 verstellbar ist. Die Stellschraube 52 ist über eine Gewindebuchse 56 (auch Justiereinrichtungsgewindebuchse oder Justiergewindebuchse genannt) in den Schneidenträger 12 integriert, die drehfest und unverschiebbar im Schneidenträger 12 befestigt ist und sich ebenfalls in Verschieberichtung des Schneidenträgers 12 erstreckt. Auf die Stellschraube 52 kann von außerhalb des Grundkörpers 16 bzw. der Zerspanungswerkzeugs 10 durch das schneidelementseitige Ende der Gewindebuchse 56 insbesondere mittels eines nicht dargestellten Stellschlüssels zugegriffen werden, der mit einer Skalierung versehen sein kann. Durch Drehen der Stellschraube 52 und somit Verschiebung des Stellglieds 52 in Verschieberichtung des Schneidenträgers 12 können die Position des Schneidenträgers 12 relativ zum Stellelement 32 und somit der Bearbeitungsdurchmesser des Zerspanungswerkzeugs 10 insbesondere bei der Voreinstellung eingestellt oder auch später verändert werden. Durch Drehen der sich an der Steuerschräge 50 abstützenden Stellschraube 52 wird der Schneidenträger 12 in seiner Verschieberichtung innerhalb der Führungsaussparung 18 bewegt. Die Ausgestaltung von Schneidenträger 12 und Stellglied/Stellschraube 52 ist insbesondere derart, dass eine Veränderung des Bearbeitungsdurchmessers bis zu 4 mm möglich ist.

Die Gewindebuchse 56 der Justiereinrichtung 54 ist vorzugsweise geschlitzt, d.h. in verschiedene Segmente geschlitzt (segmentgeschlitzt bzw. wandsegmentgeschlitzt), ausgeführt, wobei ein Gewindestift 58 vorgesehen ist, über welchen das Gewindespiel der Gewindebuchse 56 derart eingestellt werden kann, dass kein störendes Gewindespiel vorhanden, jedoch eine Betätigung/Verstellung des Stellglieds/der Stellschraube 52 noch möglich ist.

Die Gewindebuchse 56 weist vorzugsweise einen nicht näher bezeichneten, die Gewindebuchsenwand durchdringenden U-förmigen Schlitz auf, durch welchen in der Gewindebuchse 56 ein sich in axialer Richtung der Gewindebuchse 56 erstreckendes Wandsegment ausgebildet wird, das über ein Materialgelenk derart mit der restlichen Gewindebuchsenwand verbunden ist, dass es in radialer Richtung der Gewindebuchse elastisch, insbesondere nach innen, verformbar ist. An ihrem stelleinrichtungsseitigen Ende weist die Gewindebuchse 56 einen Flansch 57 auf, der an einem nicht näher bezeichneten Anschlag des Schneidenträgers 12 anliegt.

Der Gewindestift 58 ist seitlich der Gewindebuchse 56 sich parallel zu der Drehachse der Antriebsspindel/Differentialgewindespindel 34 erstreckend in einer sich parallel zum Durchbruch 30 erstreckenden Durchgangsaussparung 60 in dem Schneidenträger 12 gelagert und kann in seiner Längsrichtung verschoben werden. Die Durchgangsaussparung 60 ist am Außenumfang des Schneidenträger 12 offen, sodass insbesondere vor Einführen des Schneidenträgers 12 in die Führungsaussparung 18 zum Beispiel mittels eines entsprechenden Stellschlüssels auf den Gewindestift 58 zugegriffen werden und mittels diesem das Gewindespiel der Gewindebuchse 56 eingestellt werden kann. Nach Einstellung des Gewindespiels mittels des Gewindestifts 58 und nach Voreinstellung/Justierung der Lage des Schneidenträgers 12 in Bezug auf das Stellelement 32 in Verschieberichtung des Schneidenträgers 12 mittels der Stellschraube 52 kann die Stellschraube 52 festgelegt werden.

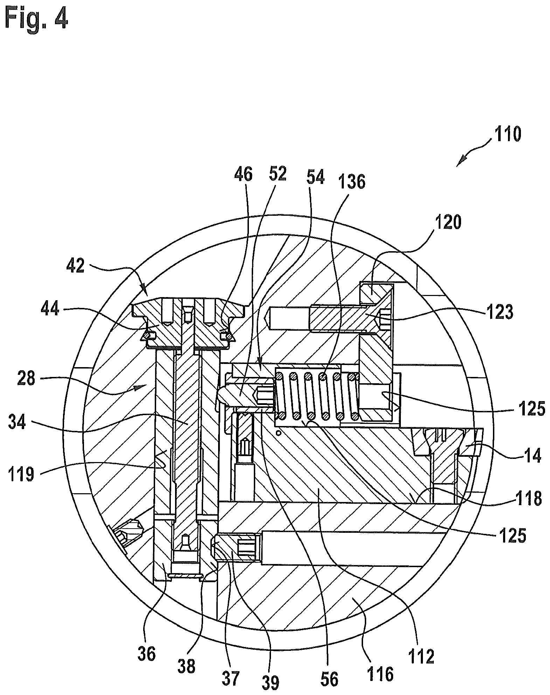

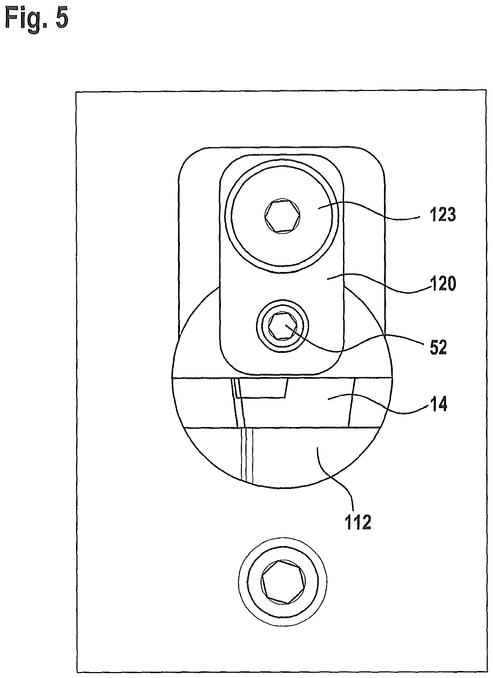

Fign. 4 und 5 zeigt eine zweite Ausführungsform eines erfindungsgemäßen Zerspanungswerkzeugs 110, bei welcher die Führungsaussparung, in welcher der Schneidenträger 112 senkrecht zur Drehachse des Grundkörpers 116 und senkrecht zur Drehachse bzw. Längsachse der Stelleinrichtung 28 verschiebbar ist, als Grundaussparung 118, d.h. als Aussparung mit einem Grund/Boden 119, ausgebildet ist. Der Schneidenträger 112 ist vorzugsweise formschlüssig und verdrehsicher, jedoch axial verschiebbar in der Grundaussparung 119 gelagert. Die Stelleinrichtung 28 mit dem Stellelement 32 und das dieser zugeordnete Betätigungselement 42 entsprechen im Wesentlichen denjenigen der in den Fign. 1-3 gezeigten ersten Ausführungsform, auch deren Beschreibung verwiesen wird. Entsprechendes gilt für die Justiereinrichtung 54 mit dem Stellglied 52, das Schneidelement 14 und die Schmiermittelzufuhr 40.

Bei der in Fign. 4 und 5 dargestellten Ausgestaltung des erfindungsgemäßen Zerspanungswerkzeugs 110 ist die Stelleinrichtung 28 am bzw. auf dem Boden 119 der Grundaussparung 118 angeordnet, sodass die Stelleinrichtung 28 und somit auch dessen Stellelement 32 in Verschieberichtung des Schneidenträgers 112 gesehen zwischen dem Boden 119 und dem Schneidenträger 112 angeordnet sind. Entsprechend der ersten Ausführungsform ist in Längsrichtung/Richtung der Drehachse der Stelleinrichtung 28 bzw. von dessen Antriebsspindel 34 einerseits im Grundkörper 116 eine Aufnahme 46 zur drehbaren Aufnahme des Betätigungselements 42 und andererseits auf der anderen Seite des Grundaussparung 118 im Grundkörper 116 eine Ausnehmung 38 zur Befestigung der feststehenden Gewindebuchse 36 vorgesehen, wobei die Aufnahme 46 und die Ausnehmung 38 aufeinander ausgerichtet sind. Ferner kann, falls erforderlich, zwischen der Aufnahme 46 und dem Schneidenträger 112 in Richtung der Drehachse der Stelleinrichtung 28 eine Ausnehmung 41 für die Antriebs- bzw. Gewindespindel 34 und ggfs. die Gewindehülse 32 im Grundkörper 116 vorgesehen sein, welche auf die Aufnahme 46 und die Ausnehmung 38 ausgerichtet ist und in welche die Aufnahme 46 bevorzugt übergeht.

D.h. bei der in Fign. 4 und 5 gezeigten Ausführungsform ist der Schneidenträger 112 in Verschieberichtung des Schneidenträgers 112 nicht beidseitig wie bei der ersten Ausführungsform, sondern nur einseitig der Stelleinrichtung 28 bzw. des Stellelements 32 ausgebildet. Der Schneidenträger 112 ist auch bei der zweiten Ausführungsform elastisch, vorzugsweise federnd gelagert. Hierzu ist in dem Schneidenträger 112 eine am Grundkörper 116 befestigte/festgelegte Traverse 120, insbesondere lose, in einer zum Grundkörper 116 und zur Grundaussparungswand hin geöffneten Aufnahme 125 gelagert, sodass der Schneidenträger 112 in seiner Verschieberichtung relativ zu der am Grundkörper 116 befestigten Traverse 120 verschoben werden, aber nicht um dessen Verschieberichtung bzw. dessen Längsachse gedreht werden kann. Die Traverse 120 bildet somit eine Verdrehsicherung für den Schneidenträger 112. Die Aufnahme 125 geht vorzugsweise in die nicht näher bezeichnete Aufnahme für die Gewindebuchse 56 der Justiereinrichtung 54 über, sodass über die Aufnahme 125 das Stellglied bzw. die Stellschraube 52 der Justiereinrichtung 54 verstellt werden kann, wobei der Durchmesser der Aufnahme 125 (bzw. deren Ausdehnung im Längsschnitt) vorzugsweise größer als der Durchmesser der Aufnahme für die Gewindebuchse 56 ist. Die Traverse 120 erstreckt sich vorzugsweise senkrecht zur Verschieberichtung des Schneidenträgers 112 in Längsrichtung der Stelleinrichtung 28 in den Grundkörper 116 hinein. Die Traverse 120 ist über eine bevorzugt von außerhalb des Grundkörpers 116 betätigbare Schraube 123 festgestellt und am Grundkörper 116 befestigt.

In der Aufnahme 125 ist vorzugsweise wenigstens eine Druckfeder 136, bevorzugt in Form einer Spiralfeder, angeordnet, auf welcher sich die Traverse 120 auf ihrer schneidelementabgewandten Seite abstützt. Die Traverse 120 ist vorzugsweise an der Druckfeder 136 befestigt. Durch die vorzugsweise als Spiralfeder ausgebildete Druckfeder 136 kann weiterhin auf das Stellglied 52 der Justiereinrichtung 54 zugegriffen werden. Der Schneidenträger 112 ist über die Druckfeder 136 federnd an der Traverse 120 gelagert und zwar federnd in Verschieberichtung des Schneidenträgers 112.

Bevorzugt erstrecken sich die Traverse 120 und ebenso deren Aufnahme 125 auch entlang der Drehachse des Grundkörpers 116 und zwar vorzugsweise beidseits der Justiereinrichtung 54, wobei die Ausdehnung der Aufnahme 125 in Richtung der Drehachse des Grundkörpers 116 größer als die Ausdehnung der Gewindebuchse 56 in derselben Richtung ist. In diesem Fall können von der Traverse 120 aus gesehen in der Aufnahme 125 beidseits der Justiereinrichtung 54 bzw. von deren Gewindebuchse 56 nicht dargestellte Druckfedern vorgesehen sein, die an gegenüberliegenden Enden bzw. Endbereichen der Traverse 120 befestigt sind und sich am die Gewindebuchse 36 umgebenden Boden der Aufnahme 125 abstützen. Insbesondere um den Bauraum für diese, vorzugsweise zwei, Druckfedern bereitzustellen, können der Schneidenträger 112 und entsprechend die Grundaussparung 118 rechteckig, insbesondere quadratisch, ausgebildet sein. Letzteres gilt auch für den Schneidenträger 12 und die Durchgangsaussparung 18 der ersten Ausführungsform.

Abgesehen von einer spanenden Bearbeitung einer Lagergasse kann das erfindungsgemäße Zerspanungswerkzeug für jedwede Nachbearbeitung oder Feinbearbeitung einer Bohrung auf einen vorgegebenen Nenndurchmesser verwendet wird. Das erfindungsgemäße Zerspanungswerkzeug kann daher auch für die Bearbeitung einer Kolbenbohrung in einem Zylinderkurbelgehäuse oder dergleichen eingesetzt werden. In diesem Fall kann es genügen, wenn das Zerspanungswerkzeug nur einen einzigen Schneidenträger 12, 112 aufweist.

Ferner sind bei der gezeigten Ausführungsform, wie sie insbesondere in Fig. 1 dargestellt ist, mehrere Schneidenträger bzw. Schneidelemente in vorgegebenen axialen Abständen entlang des Grundkörpers des Zerspanungswerkzeugs in einer Reihe angeordnet. Die Anordnung in einer Reihe ist jedoch nicht zwingend. Die in den vorgegebenen axialen Abständen angeordneten Schneidenträger können in Umfangsrichtung voneinander versetzt, beispielsweise wendelförmig, angeordnet sein, wobei dann den jeweiligen Schneidenträgern zugeordnete Stelleinrichtungen bzw. Stellelemente senkrecht zu der Verschieberichtung des ihnen zugeordneten Schneidenträgers ausgerichtet/angeordnet sind. Durch die in Umfangsrichtung versetzte Anordnung können je nach Einsatzgebiet des Zerspanungswerkzeugs die axialen Abstände zwischen den Schneidenträgern weiter verkürzt und am Grundkörper noch mehr Schneidenträger angeordnet werden. Die in Umfangsrichtung versetzte Anordnung bietet daher eine größere Gestaltungsflexibilität.

## Patentansprüche

1. Zerspanungswerkzeug mit einem um eine Drehachse drehantreibbaren Grundkörper (16; 116), wenigstens einem am Grundkörper (16; 116) radial einstellbar angeordneten Schneidenträger (12; 112) und einer Stelleinrichtung (28) zur Einstellung der Lage des Schneidenträgers (12; 112) gegenüber dem Grundkörper (16; 116), wobei
der Schneidenträger (12; 112) in einer Führungsaussparung (18; 118) im Grundkörper (16; 116) quer zur Drehachse verschiebbar angeordnet ist, und
die Stelleinrichtung (28) ein im Grundkörper (16; 116) quer zur Drehachse und quer zur Verschieberichtung des Schneidenträgers (12; 112) verstellbares Stellelement (32) aufweist, an dem der Schneidenträger (12; 112) abgestützt ist, **gekennzeichnet durch**
eine in den Schneidenträger (12; 112) integrierte Justiereinrichtung (54) zur Justierung der Lage des Schneidenträgers (12; 112) gegenüber dem Stellelement (32).

2. Zerspanungswerkzeug nach Anspruch 1, **dadurch gekennzeichnet, dass** der Schneidenträger (12; 112) in der Führungsaussparung (18; 118) formschlüssig aufgenommen ist.

3. Zerspanungswerkzeug nach Anspruch 1 oder 2, **dadurch gekennzeichnet, dass** der Schneidenträger (12; 112) in der Führungsaussparung (18; 118) verdrehsicher aufgenommen ist.

4. Zerspanungswerkzeug nach einem der vorhergehenden Ansprüche, **dadurch gekennzeichnet, dass** die Führungsaussparung als eine Durchgangsaussparung (18) ausgebildet ist.

5. Zerspanungswerkzeug nach Anspruch 4, **dadurch gekennzeichnet, dass** der Schneidenträger (12) einen sich quer zur Drehachse und quer zur Verschieberichtung erstreckenden Durchbruch (30) aufweist, in dem das Stellelement (32) aufgenommen ist.

6. Zerspanungswerkzeug nach einem der Ansprüche 1 bis 3, **dadurch gekennzeichnet, dass** die Führungsaussparung als eine Grundaussparung (118) ausgebildet ist.

7. Zerspanungswerkzeug nach Anspruch 6, **dadurch gekennzeichnet, dass** das Stellelement (32) zwischen dem Grund der Grundaussparung (118) und dem Schneidenträger (112) angeordnet ist.

8. Zerspanungswerkzeug nach einem der vorhergehenden Ansprüche, **dadurch gekennzeichnet, dass** der Schneidenträger (12; 112) gegenüber dem Grundkörper (16; 116) elastisch abgestützt ist.

9. Zerspanungswerkzeug nach einem der vorhergehenden Ansprüche, **dadurch gekennzeichnet, dass** die Stelleinrichtung (28) einen das Stellelement (32) antreibenden Gewindetrieb (34, 36) aufweist.

10. Zerspanungswerkzeug nach Anspruch 9, **dadurch gekennzeichnet, dass**
das Stellelement (32) aus einer Gewindehülse mit einer Steuerschräge (50) gebildet ist, an der der Schneidenträger (12; 112) abgestützt ist, und
der Gewindetrieb (34, 36) eine mit der Gewindehülse (32) verschraubte, am Grundkörper (16; 116) gelagerte Antriebsspindel (34) aufweist.

11. Zerspanungswerkzeug nach Anspruch 10, **dadurch gekennzeichnet, dass**
der Gewindetrieb (34, 36) eine im Grundkörper (16; 116) in einem Abstand zur Gewindehülse (32) festgelegte Gewindebuchse (36) aufweist, und
die Antriebsspindel als eine Differentialgewindespindel (34) ausgebildet ist, die mit einem ersten Gewindeabschnitt (34a) mit der Gewindehülse (32) und mit einem zweiten Gewindeabschnitt (34b) mit der Gewindebuchse (36) verschraubt ist.

12. Zerspanungswerkzeug nach Anspruch 11, **dadurch gekennzeichnet, dass** zwischen der Gewindehülse (32) und der Gewindebuchse (36) eine Druckfeder angeordnet ist.

13. Zerspanungswerkzeug nach Anspruch 11 oder 12, **dadurch gekennzeichnet, dass** die Stelleinrichtung (28) ein am Grundkörper (16; 116) drehbeweglich gehaltenes Betätigungselement (42) aufweist, das mit der Differentialgewindespindel (34) drehfest und in Verschieberichtung der Gewindehülse (32) verschiebbar verbunden ist.

14. Zerspanungswerkzeug nach einem der vorhergehenden Ansprüche, **dadurch gekennzeichnet, dass** die Justiereinrichtung (54) eine den Schneidenträger (12; 112) an dem Stellelement (32) abstützende Stellschraube (52) aufweist.

15. Zerspanungswerkzeug nach einem der vorhergehenden Ansprüche, **gekennzeichnet durch** eine Vielzahl von Schneidenträgern (12; 112), die jeweils in einer Führungsaussparung (18; 118) im Grundkörper (16; 116) quer zur Drehachse, verschiebbar angeordnet und an einem zugeordneten Stellelement (32) abgestützt sind.

16. Zerspanungswerkzeug nach Anspruch 15, **dadurch gekennzeichnet, dass** die Schneidenträger (12; 112) individuell einstellbar sind.

17. Zerspanungswerkzeug nach Anspruch 15 oder 16, **dadurch gekennzeichnet, dass** die Schneidenträger (12; 112) in verschiedenen Abständen zur Drehachse lageeinstellbar angeordnet sind.

## Claims

1. A cutting tool comprising a main part (16; 116), which can be rotationally driven about a rotational axis, at least one cutting insert holder (12; 112) arranged on the main part (16; 116) such that it can be radially set, and a setting device (28) for setting the position of the cutting insert holder (12; 112) relative to the main part (16; 116), wherein
the cutting insert holder (12; 112) is arranged in a guide recess (18; 118) in the main part (16; 116) such that it can be moved transversely to the rotational axis, and
the setting device (28) has a setting element (32), which can be set inside the main part (16; 116) transversely to the rotational axis and transversely to the direction of movement of the cutting insert holder (12; 112), and supports the cutting insert holder (12; 112), **characterized by**
an adjusting device (54), which is integrated in the cutting insert holder (12; 112), for adjusting the position of the cutting insert holder (12; 112) relative to the setting element (32).

2. The cutting tool according to claim 1, **characterized in that** the cutting insert holder (12; 112) is received in a positive manner in the guide recess (18; 118).

3. The cutting tool according to claim 1 or 2, **characterized in that** the cutting insert holder (12; 112) is received so as to be secured against rotation in the guide recess (18; 118).

4. The cutting tool according to one of the preceding claims, **characterized in that** the guide recess is formed as a through recess (18).

5. The cutting tool according to claim 4, **characterized in that** the cutting insert holder (12) has an aperture (30), which extends transversely to the rotational axis and transversely to the direction of movement and which receives the setting element (32).

6. The cutting tool according to one of claims 1 to 3, **characterized in that** the guide recess is formed as a ground recess (118).

7. The cutting tool according to claim 6, **characterized in that** the setting element (32) is arranged between the ground of the ground recess (118) and the cutting insert holder (112).

8. The cutting tool according to one of the preceding claims, **characterized in that** the cutting insert holder (12; 112) is supported elastically in relation to the main part (16; 116).

9. The cutting tool according to one of the preceding claims, **characterized in that** the setting device (28) has a threaded drive (34, 36), which drives the setting element (32).

10. The cutting tool according to claim 9, **characterized in that**
the setting element (32) is formed of a threaded sleeve comprising a control slope (50), on which the cutting insert holder (12; 112) is supported, and
the threaded drive (34, 36) has a drive spindle (34), which is screw-connected to the threaded sleeve (32) and is mounted on the main part (16; 116).

11. The cutting tool according to claim 10, **characterized in that**
the threaded drive (34, 36) has a threaded bushing (36), which is secured in the main part (16; 116) at a distance from the threaded sleeve (32), and
the drive spindle is formed as a differential threaded spindle (34), which is screw-connected with a first threaded portion (34a) to the threaded sleeve (32) and with a second threaded portion (34b) to the threaded bushing (36).

12. The cutting tool according to claim 11, **characterized in that** a compression spring is arranged between the threaded sleeve (32) and the threaded bushing (36).

13. The cutting tool according to claim 11 or 12, **characterized in that** the setting device (28) has an actuating element (42), which is held on the main part (16; 116) such that it can be rotationally moved and which is connected to the differential threaded spindle (34) in a rotationally fixed manner and so as to be movable in the direction of movement of the threaded sleeve (32).

14. The cutting tool according to one of the preceding claims, **characterized in that** the adjusting device (54) has a setting screw (52), which supports the cutting insert holder (12; 112) on the setting element (32).

15. The cutting tool according to one of the preceding claims, **characterized by** a plurality of cutting insert holders (12; 112), which are each arranged in a guide recess (18; 118) in the main part (16; 116) such that they can be moved transversely to the rotational axis, and are supported on an assigned setting element (32).

16. The cutting tool according to claim 15, **characterized in that** the cutting insert holders (12; 112) can be set individually.

17. The cutting tool according to claim 15 or 16, **characterized in that** the cutting insert holders (12; 112) are arranged at different distances to the rotational axis such that the position can be set.

## Revendications

1. Outil d'usinage par enlèvement de copeaux avec un corps de base (16 ; 116) entraînable en rotation autour d'un axe de rotation, au moins un porte-lame (12 ; 112) agencé de manière réglable radialement au niveau du corps de base (16 ; 116) et un dispositif de réglage (28) pour le réglage de la position du porte-lame (12 ; 112) par rapport au corps de base (16 ; 116), dans lequel
le porte-lame (12 ; 112) est agencé de manière mobile dans un évidement de guidage (18 ; 118) dans le corps de base (16 ; 116) transversalement à l'axe de rotation, et
le dispositif de réglage (28) présente un élément de réglage (32) réglable dans le corps de base (16 ; 116) transversalement à l'axe de rotation et transversalement au sens de déplacement du porte-lame (12 ; 112), contre lequel le porte-lame (12 ; 112) est en appui, **caractérisé par**
un dispositif d'ajustement (54) intégré dans le porte-lame (12 ; 112) pour l'ajustement de la position du porte-lame (12 ; 112) par rapport à l'élément de réglage (32).

2. Outil d'usinage par enlèvement de copeaux selon la revendication 1, **caractérisé en ce que** le porte-lame (12 ; 112) est reçu par complémentarité de formes dans l'évidement de guidage (18 ; 118).

3. Outil d'usinage par enlèvement de copeaux selon la revendication 1 ou 2, **caractérisé en ce que** le porte-lame (12 ; 112) est reçu sans pouvoir tourner dans l'évidement de guidage (18 ; 118).

4. Outil d'usinage par enlèvement de copeaux selon l'une quelconque des revendications précédentes, **caractérisé en ce que** l'évidement de guidage est réalisé comme un évidement traversant (18).

5. Outil d'usinage par enlèvement de copeaux selon la revendication 4, **caractérisé en ce que** le porte-lame (12) présente un perçage (30) s'étendant transversalement à l'axe de rotation et transversalement au sens de déplacement, dans lequel l'élément de réglage (32) est reçu.

6. Outil d'usinage par enlèvement de copeaux selon l'une quelconque des revendications 1 à 3, **caractérisé en ce que** l'évidement de guidage est réalisé comme un évidement de base (118).

7. Outil d'usinage par enlèvement de copeaux selon la revendication 6, **caractérisé en ce que** l'élément de réglage (32) est agencé entre le fond de l'évidement de base (118) et le porte-lame (112).

8. Outil d'usinage par enlèvement de copeaux selon l'une quelconque des revendications précédentes, **caractérisé en ce que** le porte-lame (12 ; 112) est en appui élastiquement par rapport au corps de base (16 ; 116).

9. Outil d'usinage par enlèvement de copeaux selon l'une quelconque des revendications précédentes, **caractérisé en ce que** le dispositif de réglage (28) présente un mécanisme fileté (34, 36) entraînant l'élément de réglage (32).

10. Outil d'usinage par enlèvement de copeaux selon la revendication 9, **caractérisé en ce que**
l'élément de réglage (32) est formé par une douille filetée avec un biais de commande (50), contre lequel le porte-lame (12 ; 112) est en appui, et
le mécanisme fileté (34, 36) présente une broche d'entraînement (34) vissée à la douille filetée (32), logée au niveau du corps de base (16 ; 116).

11. Outil d'usinage par enlèvement de copeaux selon la revendication 10, **caractérisé en ce que**
le mécanisme fileté (34, 36) présente un manchon fileté (36) fixé dans le corps de base (16 ; 116) à une distance de la douille filetée (32), et
la broche d'entraînement est réalisée comme une vis-mère différentielle (34) qui est vissée avec une première section filetée (34a) à la douille filetée (32) et avec une seconde section filetée (34b) au manchon fileté (36).

12. Outil d'usinage par enlèvement de copeaux selon la revendication 11, **caractérisé en ce qu'**un ressort de pression est agencé entre la douille filetée (32) et le manchon fileté (36).

13. Outil d'usinage par enlèvement de copeaux selon la revendication 11 ou 12, **caractérisé en ce que** le dispositif de réglage (28) présente un élément d'actionnement (42) maintenu de manière mobile en rotation au niveau du corps de base (16 ; 116) qui est relié de manière fixe en rotation à la vis-mère différentielle (34) et de manière mobile dans le sens de déplacement de la douille filetée (32).

14. Outil d'usinage par enlèvement de copeaux selon l'une quelconque des revendications précédentes, **caractérisé en ce que** le dispositif d'ajustement (54) présente une vis de réglage (52) soutenant le porte-lame (12 ; 112) contre l'élément de réglage (32).

15. Outil d'usinage par enlèvement de copeaux selon l'une quelconque des revendications précédentes, **caractérisé par** une pluralité de porte-lame (12 ; 112) qui sont agencés de manière mobile respectivement dans un évidement de guidage (18 ; 118) dans le corps de base (16 ; 116) transversalement à l'axe de rotation et sont en appui contre un élément de réglage (32) associé.

16. Outil d'usinage par enlèvement de copeaux selon la revendication 15, **caractérisé en ce que** les porte-lame (12 ; 112) sont réglables individuellement.

17. Outil d'usinage par enlèvement de copeaux selon la revendication 15 ou 16, **caractérisé en ce que** les porte-lame (12 ; 112) sont agencés de manière réglable en position à différentes distances de l'axe de rotation.
